# EUROPÄISCHE PATENTANMELDUNG

(11) **EP 2 003 406 A2**
(43) Veröffentlichungstag der Anmeldung: **17.12.2008**
(21) Anmeldenummer: 08103945.5
(22) Anmeldetag: 14.05.2008
(51) Int. Cl.: F24J 2/52, H01L 31/042, H01L 31/048

(54) **Traganordnung für eine Solaranlage, Solaranlage mit einer Mehrzahl von Solarmodulen und Solarmodul hierfür**

(30) Priorität: 15.06.2007 DE 202007008614 U
(71) Anmelder: Phoenix Solar Aktiengesellschaft, 85254 Sulzemoos (DE)
(72) Erfinder: Bächler, Manfred, 89250 Senden (DE)
(74) Vertreter: Weber, Gerhard

(57) **Zusammenfassung**

Für eine Traganordnung zur Montage mehrerer Solarmodule, insbesondere über geneigten Dachflächen (DF), wird vorgeschlagen, in Richtung der Dachneigung verlaufende Länsgträgerelemente (LT) als elastisch bogenförmig gespannte Profile (LP) auszubilden, wobei ein einen Bogenabschnitt überspannendes Zugelement (ZE) die elastische Spannung abfängt. Solarmodule (SM) sind auf Querträgern (QT) befestigt, welche auf den Längsträgern (LT) gehalten sind. Die Solarmodule (SM) sind vorteilhafterweise werkzeuglos mit den Querträgern (QT) verbindbar bzw. von diesen lösbar.

## Beschreibung

Die Erfindung betrifft eine Traganordnung für eine Solaranlage, eine Solaranlage mit einer Mehrzahl von Solarmodulen und ein Solarmodul hierfür.

Neben großflächigen Freilandanlagen mit dem Erdboden als Grundfläche sind Solaranlagen häufig auf geneigten Dachflächen mit im wesentlichen parallel zur Dachfläche als Grundfläche ausgerichteten Modulflächen der flächigen Solarmodule angeordnet. Zur Montage wird in der Regel eine Traganordnung auf der Dachkonstruktion befestigt, welche ihrerseits die Solarmodule aufnimmt. Darüber hinaus sind auch Solaranlagen auf Flachdächern montiert.

Aus der DE 20 2005 006 951 U1 ist ein Montagesystem mit Grundschienen und quer zu diesen verlaufenden Modulschienen bekannt, wobei die Grundschienen auf der Dachkonstruktion befestigt werden und die Solarmodule auf den Modulschienen gehalten sind. Ein ähnliches System ist aus der DE 20 2005 007 855 U1 bekannt.

Der vorliegenden Erfindung liegt die Aufgabe zugrunde, eine insbesondere hinsichtlich der Montage weiter verbesserte Traganordnung für Solarmodule, eine Solaranlage mit mehreren Solarmodulen und ein Solarmodul hierfür anzugeben.

Erfindungsgemäße Lösungen sind in den unabhängigen Ansprüchen beschrieben. Die abhängigen Ansprüche enthalten vorteilhafte Ausgestaltungen und Weiterbildungen der Erfindung.

Bei der erfindungsgemäßen Traganordnung ergibt sich durch den von der Grundfläche weg gewölbten Verlauf des Längsträgerprofils und der Stabilisierung des gewölbten Verlaufs durch ein den von dem Längsprofil gebildeten Bogen als Bogensehne überspannenden Zugelement die Möglichkeit, mit einem geringen Querschnitt und damit verbunden einem geringen Gewicht des Längsprofils eine große Weite zwischen in Längsrichtung aufeinander folgenden Abstützungen des Längsprofils gegen die Grundfläche, insbesondere die Dachfläche mit einer diese tragenden Dachkonstruktion zu überspannen. Vorzugsweise ist ein Längsträger nur an genau zwei Befestigungspositionen, welche vorteilhafterweise im Bereich der Enden des Längsprofils liegen, gegen die Grundfläche abgestützt und überbrückt die Distanz zwischen den beiden Befestigungspositionen freitragend. Durch die erfindungsgemäße Traganordnung kann eine mittlere Flächendichte von weniger als 0,5 Abstützpunkten der Traganordnung gegen die Grundfläche je Quadratmeter Solarmodulfläche erreicht und damit der Montageaufwand und bei Dachflächenmontage die Zahl der Durchgriffe durch die Dachhaut besonders gering gehalten werden. Als Längsprofil sei dabei ein langgestrecktes Trägerelement nach Art eines Stabes oder vorzugsweise eines Rohres oder sonstigen Hohlprofils verstanden, welches quer zu seinem Längsverlauf entgegen einem Biegewiderstand elastisch durchbiegbar, in seiner Länge aber als unveränderlich anzusehen ist.

Die mehreren Längsträger sind in einer ersten vorteilhaften Ausführung über mehrere Querträger untereinander verbunden, welche vorteilhafterweise auf der der Grundfläche abgewandten Seite der Längsträger angeordnet und mit diesen verbunden sind und vorzugsweise zugleich die Modulträger für die Solarmodule bilden.

In anderer vorteilhafter Ausführung können die Längsträger auch direkt die Modulträger bilden. Querträger können dann entfallen oder lediglich zur Queraussteifung der Traganordnung vorgesehen sein.

Als Längsrichtung oder Richtung der Längsträger sei dabei bei bevorzugter Dachflächenmontage mit Dachsparren in der Dachkonstruktion, insbesondere die Richtung der Dachsparren, bei herkömmlicher Dachkonstruktion also die Richtung der Dachneigung parallel zur Dachfläche und als Querrichtung die im wesentlichen senkrecht zu den Dachsparren, bei herkömmlicher Dachkonstruktion im wesentlichen horizontale Richtung parallel zur Dachfläche, also die Richtung parallel zum Dachfirst verstanden. Durch die vorteilhafterweise mögliche geringe Anzahl von Abstützpunkten, an welchen die Traganordnung mittels der Befestigungsmittel auf der Dachanordnung befestigt ist, sind Unebenheiten der Dachfläche besonders einfach ausgleichbar.

Die erfindungsgemäße Traganordnung ist auch vorteilhaft in anderer Ausrichtung über einer geneigten Dachfläche, insbesondere mit im wesentlichen horizontaler Ausrichtung der Längsträger und/oder bei Flachdachmontage, Freilandmontage oder anderen Anlagenaufstellungen einsetzbar.

Die in der Traganordnung gewölbten Längsprofile stehen vorteilhafterweise unter einer Biegespannung, welche eine streckend, d. h. die Wölbung verringernd gerichtete Rückstellkraft bewirkt und sind vorzugsweise durch Biegen aus einer von Biegespannungen freien Grundform unter elastischer Verformung in den gewölbten Verlauf in der Traganordnung gebracht. In bevorzugter Ausführung verlaufen die Längsprofile in der spannungsfreien Grundform linear. Die Längsträger werden vorteilhafterweise bereits mit dem gewölbten und durch das Zugelement stabilisierten Verlauf der Längsprofile an die Montagebaustelle geliefert. In anderer vorteilhafter Ausführung zeigen die Längsprofile bereits in der spannungsfreien Grundform einen gewölbten und der Form in der Traganordung angenäherten Verlauf.

Die Wölbung ist vorteilhafterweise in der Traganordnung in begrenztem Umfang veränderbar. Bei Belastung der Längsträger mit dem Gewicht insbesondere der Solarmodule ist die Gewichtskraft auf eine Verringerung der Wölbung gerichtet. Dies wird durch das Zugelement verhindert, ohne die Befestigungsmittel zwischen Längsträgern und Grundfläche mit zusätzlichen Querkräften zu belasten. Der Längsträger bildet mit dem gewölbten Längsprofil und dem die Wölbung stabilisierenden Zugelement bei geringem Eigengewicht ein in sich gegen eine Verringerung der Wölbung hoch stabile Anordnung.

In bevorzugter Ausführung mit Montage der Traganordnung auf einer Dachkonstruktion mit parallelen Dachsparren ist in Querrichtung über die von der Solaranordnung überdeckte Fläche auf jedem Dachsparren einer herkömmlichen Dachkonstruktion ein Längsträger befestigt.

Als Zugelement sei ein Element bezeichnet, das im wesentlichen ohne eigene Längenänderung Zugkräfte in der im Anwendungsfall auftretenden Höhe aufnehmen kann. Das Zugelement kann stangenförmig oder durch ein weiteres Profil gebildet sein. In bevorzugter Ausführung enthält das Zugelement ein flexibles Element, wie z. B. ein Band oder ein Seil, insbesondere ein Stahlseil. Das Zugelement ist vorzugsweise im Bereich der beiden entgegen gesetzten Enden des Längsprofils mit diesem verbunden. Bei einem Rohr oder Hohlprofil als Längsprofil kann insbesondere ein Verbindungselement an den Profilenden aufgesteckt sein. In anderer vorteilhafter Ausführung können mit dem Profil, vorzugsweise jeweils in geringem Abstand von den entgegen gesetzten Profilenden, Anschlusselemente gekoppelt sein, an welchen das Zugelement abgestützt ist. In bevorzugter Ausführung dienen solche Anschlusselemente zugleich zur Verbindung mit auf der Dachkonstruktion befestigten Befestigungselementen.

Die Wölbung des Längsprofils als Abstand des Scheitelpunkts des gewölbten Verlaufs des Längsprofils von dem Zugelement beträgt vorteilhafterweise wenigstens 1 %, vorzugsweise wenigstens 2 % der Länge der Bogensehne entlang des Zugelements. Die Wölbung des Längsprofils eines Längsträgers ist vorteilhafterweise in der Traganordnung in begrenztem Umfang verstellbar. Vorzugsweise ist hierfür die wirksame Länge des Zugelements als Länge der Bogensehne entlang des Zugelements veränderbar. Eine solche Veränderung der wirksamen Länge erfolgt vorteilhafterweise über eine Verstelleinrichtung an einem Ende des Zugelements, vorzugsweise über eine Gewindeverbindung. In alternativer Ausführung kann auch eine Verschiebung wenigstens einer der beiden Verbindungsstellen zwischen Zugelement und Längsprofil vorgesehen sein.

Bei einer Solaranlage mit mehreren flächigen Solarmodulen, welche auf einer Traganordnung mit mehreren parallelen Modulträgern angeordnet und über Halteelemente auf zwei parallelen langgestreckten Modulträgern gehalten sind, können vorteilhafterweise Halteelemente an den Solarmodulen selbst vorgesehen sein, welche jeweils einen der beiden Modulträger zumindest teilweise auf dessen dem Solarmodul abgewandter Seite hintergreifen. Vorzugsweise sind zumindest an einem der beiden Modulträger die Halteelemente werkzeuglos in Eingriff mit dem Modulträger bringbar oder von diesem lösbar. Die Modulträger verlaufen vorzugsweise auf der der Lichteinfallseite abgewandten Rückseite der Solarmodule. Der werkzeuglos herstellbare und/oder lösbare Eingriff zwischen Halteelement und Modulträger ermöglicht eine besonders vorteilhafte Montage und z. B. zum Austausch eines defekten Solarmoduls, Demontage von Solarmodulen. Die Halteelemente können auf der Rückseite oder an Seitenkanten der Solarmodule angeordnet sein. Die Halteelemente sind vorzugsweise zu jedem der beiden Modulträger paarweise vorgesehen.

In erster vorteilhafter Ausführungsform können Halteelemente eine Aufnahme für einen Modulträger bilden, welche in einer zur Modulfläche parallelen Richtung offen ist, wobei die Halteelemente vorteilhafterweise nahe einem Rand des Moduls angeordnet sind und die Öffnung der Aufnahme diesem Rand zuweist. Ein Herstellen oder Lösen des Eingriffs zwischen Halteelement und Modulträger erfolgt dann durch eine Bewegung quer zu den langgestreckten Modulträger und parallel zur Modulfläche.

In zweiter vorteilhafter Ausführungsform können Halteelemente eine Aufnahme für einen Modulträger bilden, welche im wesentlichen in einer zur Modulfläche senkrechten Richtung offen ist. Ein Herstellen oder Lösen des Eingriffs zwischen Halteelement und Modulträger erfolgt dann durch eine Bewegung quer zu dem langgestreckten und senkrecht zu der Modulfläche.

In bevorzugter Ausführung sind Halteelemente der vorgenannten ersten und zweiten Ausführungsform an einem Solarmodul in der Weise kombiniert, dass das Solarmodul über Halteelemente der ersten Ausführungsform an einem ersten Modulträger und über Halteelemente der zweiten Ausführungsform an einem zweiten Modulträger gehalten sind und ein Herstellen oder Lösen des Eingriffs der Halteelemente mit den beiden Modulträgern nacheinander in einer Kombination der beiden Bewegungsformen erfolgt.

Vorzugsweise verlaufen bei zwischen Horizontale und Vertikale geneigten Modulflächen die langgestreckten Modulträger im wesentlichen horizontal, so dass Gewichtskräfte der Solarmodule im wesentlichen nur quer zu den Modulträgern wirken. Die Modulträger weisen vorteilhafterweise eine im wesentlichen kreisrunde Einhüllende des Querschnitts auf.

Die Längsträgerprofile können in vorteilhafter Ausführungsform als Rohre ausgeführt sein. Ein für die Dachmontage vorteilhaft geringes Gewicht der Längsträgerprofile bei gleichzeitig kostengünstiger Herstellung ergibt sich durch deren Ausführung als ein durch mehrfaches Abkanten eines ebenen Bleches gebildeten Profils, welches in bevorzugter Ausführungsform Teilbereiche mit wenigstens zwei aneinander anliegenden und vorzugsweise in den Blechflächen miteinander verbundenen Blechlagen. Vorteilhafterweise enthält ein solches Profil mehrere Teilbereiche mit nur einer Blechlage und mehrere Teilbereiche mit wenigstens zwei Blechlagen.

Die Erfindung ist nachfolgend anhand bevorzugter Ausführungsbeispiele unter Bezugnahme auf die Abbildungen noch eingehend veranschaulicht. Dabei zeigen in jeweils verschiedenen Ansichten und Schnitten:
- Fig. 1: eine erfindungsgemäße Traganordnung auf einer Dachfläche,
- Fig. 2: einen Längsträger in Seitenansicht,
- Fig. 3: einen Ausschnitt aus der Traganordnung in einem Endbereich eines Längsträgers,
- Fig. 4: eine Seitenansicht eines Solarmoduls auf einer Traganordnung,
- Fig. 5: eine Modulhalterung mit einem ersten Halteelement,

- Fig. 6: eine Modulhalterung mit einem zweiten Halteelement,
- Fig. 7: eine bevorzugte Ausführung einer Befestigungsanordnung,
- Fig. 8: eine Seitenansicht einer Traganordnung mit Befestigungsanordnungen nach Fig. 7,
- Fig. 9: eine Traganordnung ohne Querträger.

Die nachfolgenden Ausführungsbeispiele und Abbildungen beziehen sich auf die bevorzugte Montage einer Traganordnung bzw. einer Solaranlage über einer geneigten Dachfläche als Grundfläche mit in Richtung der Dachneigung verlaufender Längsrichtung, ohne dass die Erfindung hierauf beschränkt sein soll.

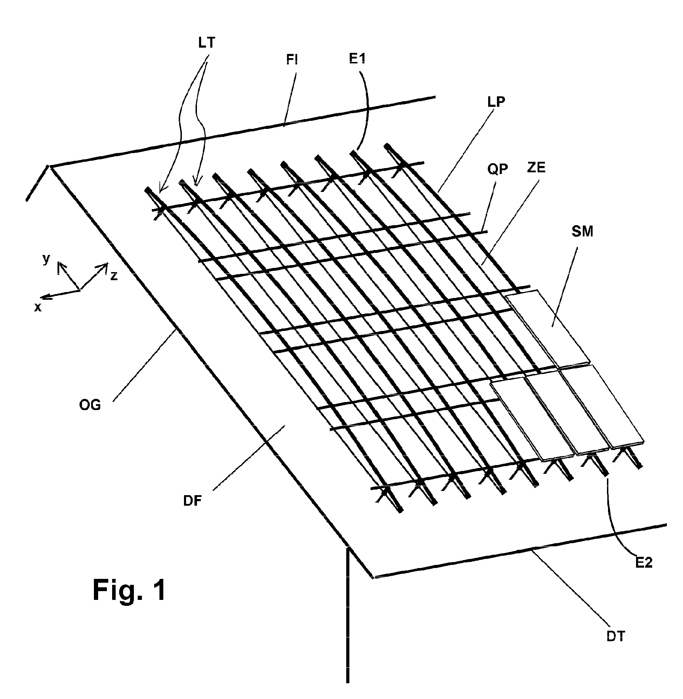

Fig. 1 zeigt in Schrägansicht auf eine Dachfläche DF eines Gebäudes eine erfindungsgemäße Traganordnung. In der Figur ist ein xyz-Koordinatenkreuz mit eingezeichnet, wobei die Koordinate x parallel zu Dachfirst FI und Dachtraufe DT im wesentlichen horizontal und parallel zur Dachfläche DF, die Koordinatenrichtung y in Richtung der Dachneigung parallel zur Dachfläche DF und zum Ortgang OG und die Koordinatenrichtung z in Richtung der Flächennormalen der Dachfläche DF verlaufen. Die y-Richtung ist nachfolgend auch als Längsrichtung und die x-Richtung auch als Querrichtung bezeichnet. Die Dachfläche DF ist gegen die Horizontale geneigt ausgerichtet, so dass sowohl die y-Richtung als auch die z-Richtung gegen die Horizontale und die Vertikale geneigt verlaufen.

Die Traganordnung besteht im wesentlichen aus einer Mehrzahl von Längsträgern LT und auf diesen befestigten Querträgern QP sowie Befestigungselementen BE, mittels welcher die Traganordnung auf der Dachkonstruktion befestigt ist.

Die Längsträger LT enthalten jeweils ein von der Dachfläche DF weg gewölbt verlaufendes Längsprofil LP und ein Zugelement ZE, welches vorzugsweise im Bereich der Enden E1, E2 des Längsprofils LP mit diesem verbunden ist. Die Verbindungspunkte von Zugelement ZE und Längsprofil LP können grundsätzlich auch von den Enden des Längsprofils beabstandet sein, vorzugsweise aber nur um ein geringes Maß, da eine längere Bogensehne bei gleicher Krümmung des Längsprofil kräftemäßig günstiger ist. Die von dem Längsprofil LP mit dem Zugelement ZE aufgespannte Ebene liegt in einer y-z-Ebene des Koordinatensystems. Die mehreren Längsträger LT sind in Querrichtung x über die Querträger QP, welche vorteilhafterweise als Profile ausgeführt und nachfolgend auch als Querprofile bezeichnet sind, untereinander verbunden. Die Querprofile QP dienen vorteilhafterweise zugleich als Modulträger zur Befestigung von flächigen Solarmodulen auf der Traganordnung. Mehrere solcher flächiger Solarmodule sind in Fig. 1 mit eingezeichnet. Im fertig montierten Zustand ist die gesamte Traganordnung mit vorzugsweise regelmäßig angeordneten flächigen Solarmodulen SM bedeckt.

In den Längsträgern LT innerhalb der Traganordnung ist jeweils das Zugelement ZE auf Zug beansprucht. Das Zugelement ZE stabilisiert die gewölbte Form des Längsprofils LP gegen eine Verringerung des Maßes der Aufwölbung, d.h. eine Streckung, insbesondere bei auf der Traganordnung montierten Solarmodulen, deren Gewicht als Kraft in Richtung einer Verringerung der Aufwölbung und dabei einer Erhöhung der Zugkraft in dem Zugelement wirkt. Vorzugsweise ist das Längsprofil in der Traganordnung gegenüber einer Grundform ohne gewölbten Verlauf oder mit geringer gewölbtem Verlauf durch elastische Biegeverformung in die Form innerhalb der Traganordnung gebracht und in dieser Form durch das Zugelement stabilisiert. Die Grundform des Längsprofils ist in bevorzugter Ausführung linear, kann aber auch mit geringerer Krümmung vorgebogen sein. Das Längsprofil LP kann in vorteilhafter Ausführung durch ein Rohr gebildet sein.

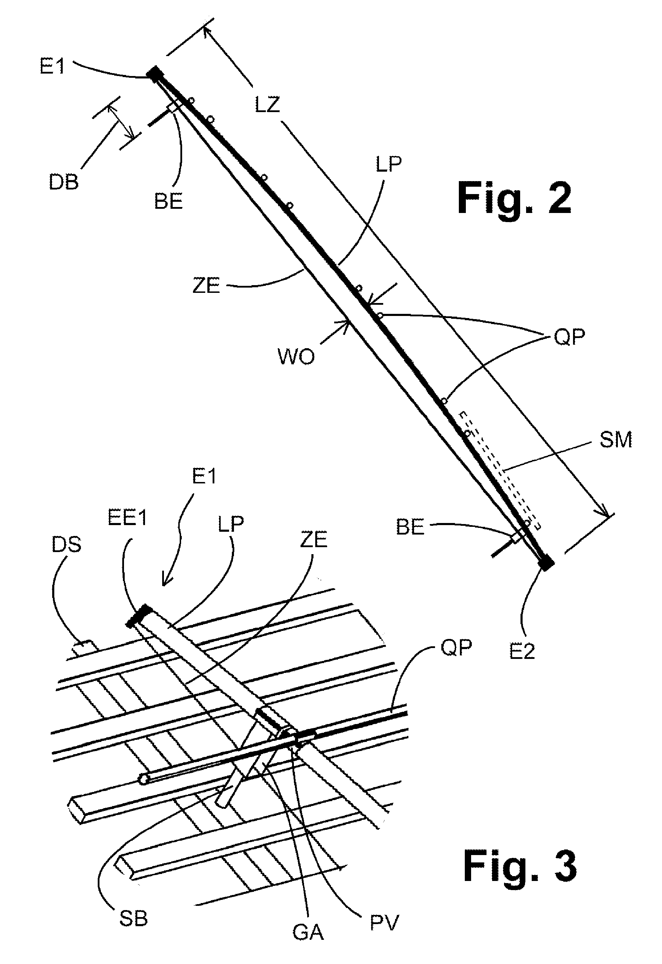

Fig. 2 zeigt eine Seitenansicht eines Längsträgers mit einem mit unterbrochener Linie angedeuteten Solarmodul SM. Weitere Solarmodule sind der Übersichtlichkeit halber nicht mit eingezeichnet.

Das Längsprofil LP bildet vorteilhafterweise einen monoton gekrümmten, von der Dachfläche weg gewölbten Bogen und das Zugelement ZE verläuft entlang einer Bogensehne dieses Bogens. Das Zugelement ZE ist vorteilhafterweise im Bereich der Enden E1, E2 mit dem Längsprofil verbunden. Die Länge des Zugelements ist mit LZ bezeichnet und beträgt typischerweise mehrere Meter. Das Maß der Aufwölbung ist als Abstand des Scheitelpunkts der Wölbung gegenüber der durch das Zugelement ZE gebildeten Bogensehne eingetragen und beträgt vorteilhafterweise wenigstens 1 %, vorzugsweise wenigstens 2 % der Länge LZ der Bogensehne. Die Fig. 2 ist nicht maßstäblich gezeichnet und dient lediglich zur Veranschaulichung.

Die Befestigungselemente BE zur Befestigung der Traganordnung auf einer Dachkonstruktion sind vorteilhafterweise in Endbereichen des Längsprofils LP mit diesem verbunden. Der Abstand der Verbindungspositionen der Befestigungselemente BE an den Längsprofilen LP von deren Enden E1 bzw. E2 ist mit DB bezeichnet und beträgt vorteilhafterweise weniger als die Hälfte der Erstreckung eines Solarmoduls in Längsrichtung y. Vorteilhafterweise befinden sich die Verbindungspositionen der Befestigungselemente BE mit dem Längsprofil LP dicht bei Kreuzungspunkten der in Längsrichtung äußersten Querprofile QP.

Vorteilhafterweise ist das Maß WO der Aufwölbung des Längsprofils LP gegen das entlang der Bogensehne verlaufende Zugelement ZE in begrenztem Umfange veränderbar. Hierzu kann insbesondere an einem der beiden Enden E1 oder E2 eine Verstelleinrichtung vorgesehen sein, mittels welcher die wirksame Länge des Zugelements als Länge der Bogensehne des durch das gekrümmte Längsprofil aufgespannten Bogens veränderbar ist. Eine solche Verstelleinrichtung kann insbesondere eine Gewindeeinrichtung enthalten, mittels welcher durch Drehung einer Mutter um eine drehgesicherte Gewindestange oder einer Schraube relativ zu einer drehgesicherten Gewindehülse oder ähnliche, an sich bekannte Spanneinrichtungen enthalten.

Fig. 3 zeigt einen vergrößerten Ausschnitt aus einem Endbereich eines Längsträgers. Auf dem Ende E1 des Längsprofils LP ist eine das Rohende des Längsprofils LP übergreifende Verbindungshülse EE1 als Verbindungselement aufgesteckt, in welcher das obere Ende des Zugelements ZE eingehängt und befestigt ist.

Das Befestigungselement BE bildet vorteilhafterweise über der Dachfläche in Richtung des Längsprofils eine von der Dachfläche weg offene Gabel, in welcher das Zugelement ZE geführt ist. Auf der Gabel ist mit Rohrschellen oder sonstigen bekannten Befestigungselementen das Längsprofil LP befestigt. Das Befestigungselement kann beispielsweise mittels eines der Dachkonstruktion zuweisenden Schraubbolzens in einen Dachsparren der Dachkonstruktion eingeschraubt sein. Die Durchführung des Schraubbolzens SB durch die Dachhaut kann vorteilhafterweise durch eine den Schraubbolzen umgebende elastische Dichtung abgedichtet sein. Bei typischem Aufbau der Dachhaut aus Dachziegeln kann insbesondere ein Dachziegel durch eine Platte mit einer vorbereiteten Durchführung ersetzt sein. Das Zugelement ZE ist vorzugsweise durch ein Stahlseil gegeben.

Ein Querprofil QP ist dicht bei der Verbindungsposition zwischen Befestigungselement und Längsprofil auf der der Dachfläche abgewandten Seite des Längsprofils mit dem Längsprofil verbunden, wofür ein Profilverbindungselement PV mit dem Längsprofil und dem Querprofil verbunden ist. Das Querprofil QP kann, wie aus der Skizze ersichtlich, auch lediglich in das Profilverbindungselement PV eingeschnappt sein.

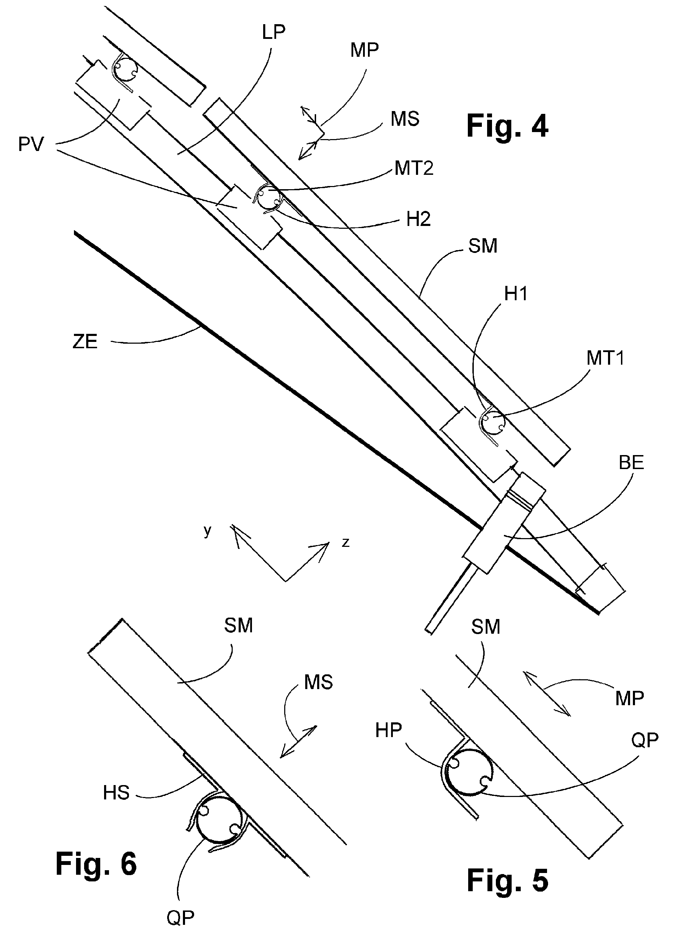

Fig. 4 zeigt mit Blickrichtung in Querrichtung x einen Ausschnitt aus einer Solaranlage mit montierten Solarmodulen SM. An den Solarmodulen SM sind der Lichteinfallseite LS abgewandt und den Querprofilen QP als Modulträgern MT1, MT2 zugewandt Halteelemente H1, H2 angeordnet. Die Halteelemente können mit Modulrahmen der Solarmodule oder bei rahmenlosen Modulen mit den der Lichteinfallseite abgewandten Rückseiten der flächigen Solarmodule verbunden, insbesondere auch aufgeklebt sein. Die Solarmodule sind vorzugsweise bereits vor Anlieferung an die Montagebaustelle mit den Halteelementen an vorgegebenen Positionen vorbereitet. Die vorgegebenen Positionen entsprechen in Längsrichtung y dem gegenseitigen Abstand zweier Querprofile QP, welche jeweils in Querrichtung durchgehend zur Halterung einer Reihe von Solarmodulen dienen. Die Positionen der Modulträger in Längsrichtung y können gleichfalls bereits vor Anlieferung der Komponenten der Traganordnung an die Montagebaustelle durch Vorgabe der Positionen der Profilverbindungselemente PV vorgegeben sein, so dass auf der Montagebaustelle die Querträger nur noch in die Profilverbindungselemente PV eingesetzt werden und die Positionen der Modulträger damit in Längsrichtung y bereits mit hoher Genauigkeit vorliegen.

Der Eingriff der ersten Halteelemente H1 und/oder der zweiten Halteelemente H2 mit dem Beispielsfall durch die Querprofile QP gebildeten Modulträgern MT1, MT2 erfolgt vorteilhafterweise beim Herstellen des Eingriffs und/oder beim Lösen des Eingriffs werkzeuglos, wodurch die Montagezeit erheblich reduziert werden kann. Vorzugsweise sind in Querrichtung x, also senkrecht zur Zeichenebene der Fig. 4, je Solarmodul jeweils zwei erste Halteelemente H1 und zwei zweite Halteelemente H2 vorgesehen, welche in Querrichtung x voneinander beabstandet und vorzugsweise nahe bei den in x-Richtung gegenüber liegenden Rändern der Solarmodule angeordnet sind.

Fig. 5 zeigt eine erste vorteilhafte Ausführung eines Halteelements HP. Dieses bildet eine Aufnahme für den Modulträger, welche parallel zur Modulfläche offen ist, wodurch durch eine Bewegung des Solarmoduls parallel zur Modulfläche, wie durch den Bewegungspfeil MP angedeutet, ein Eingriff zwischen Halteelement HP und Modulträger QP herstellbar bzw. lösbar ist. Die Öffnung der Aufnahme des Halteelements HP kann kleiner sein als der Durchmesser des Modulträgers und das Halteelement HP ist dann vorteilhafterweise elastisch aufweitbar, um den Modulträger aufzunehmen oder freizugeben. Ein Halteelement der für das Halteelement HP beschriebenen Art ist vorteilhafterweise in Richtung der Öffnung der Aufnahme nahe bei einem Rand des Solarmoduls, in dem in Fig. 4 skizzierten Beispielsfall als erstes Haltelement H1 nahe bei dem in Längsrichtung y unteren Rand des Solarmoduls angeordnet. Das Solarmodul ist durch das Haltelement HP senkrecht zur Modulfläche, d.h. in z-Richtung quer zum Modulträger formschlüssig sicher an diesem gehalten.

Fig. 6 zeigt eine zweite vorteilhafte Ausführung eines Halteelements HS, bei welchem eine Aufnahme für einen Modulträger in Richtung der Flächennormalen des Solarmoduls von dessen Rückseite weg zur Dachfläche bzw. zu dem Modulträger hin offen ist. Das Herstellen oder Lösen eines Eingriffs des Halteelements mit dem durch das Querprofil QP gebildeten Modulträger erfolgt durch eine durch den Pfeil MS angedeutete Bewegung in Richtung der Flächennormale des Solarmoduls. Die Öffnung der Aufnahme des Halteelements HS ist vorzugsweise gegenüber dem Querschnitt des Modulträgers verengt und das Halteelement HS ist elastisch aufweitbar, um den Modulträger schnappend aufzunehmen oder freizugeben. Das Solarmodul ist durch das Halteelement HS in y-Richtung, d.h. parallel zur Modulfläche und quer zur Richtung (x) des Modulträgers formschlüssig sicher gehalten. Die Haltekraft gegen ein Abheben des Moduls in Richtung der Flächennormalen der Modulfläche in z- Richtung quer zum Modulträger ist bei schnappender Halterung durch die elastische Spannkraft des Halteelements gegen eine Aufweitung der Öffnung der Aufnahme bestimmt.

Vorteilhafterweise sind in einem Solarmodul die in Fig. 5 und Fig. 6 skizzierten Halteelemente HP bzw. HS kombiniert, insbesondere indem wie in Fig. 4 skizziert die ersten Halteelemente H1 nach Art des Halteelements HP aus Fig. 5 und die zweiten Halteelemente H2 nach Art des Halteelements HS in Fig. 6 ausgeführt sind. Eine Montage eines Solarmoduls auf der Traganordnung erfolgt dann in vorteilhafter Weise in der Art, dass das Solarmodul in einer gegenüber der in Fig. 4 skizzierten Montage-Endstellung oben von der Traganordnung weg gekippten Stellung unten mit den ersten Halteelementen H1 in Bewegungsrichtung MP parallel zur Modulfläche auf den unteren Modulträger MT1 aufgesteckt wird und danach um den unteren Modulträger MT1 geschwenkt wird und mit Bewegungsrichtung MS senkrecht zur Modulfläche die zweiten Halteelemente H2 in der Art der Halteelemente HS von Fig. 6 mit dem zweiten Modulträger MT2, vorzugsweise schnappend, in Eingriff gebracht werden. Das Lösen eines einzelnen Solarmoduls, beispielsweise um ein defektes Modul auszutauschen, kann in umgekehrter Reihenfolge der Bewegungen besonders einfach und ohne Demontage anderer Solarmodule erfolgen.

Zum Zwecke der Diebstahlsicherung und/oder zur Berücksichtigung erhöhter Windlast auf die Solarmodule können noch zusätzlich Sicherungselemente bei den Solarmodulen, insbesondere an den Halteelementen nach Art der Halteelemente HS von Fig. 6, vorgesehen sein.

Für die Längsprofile und die Querprofile können vorteilhafterweise kostengünstig verfügbare Rohre mit rundem oder rechteckigem Querschnitt eingesetzt sein. In anderer Ausführung können aber auch Spezialquerschnitte, beispielsweise mit integrierten Kabelkanälen, gewählt werden.

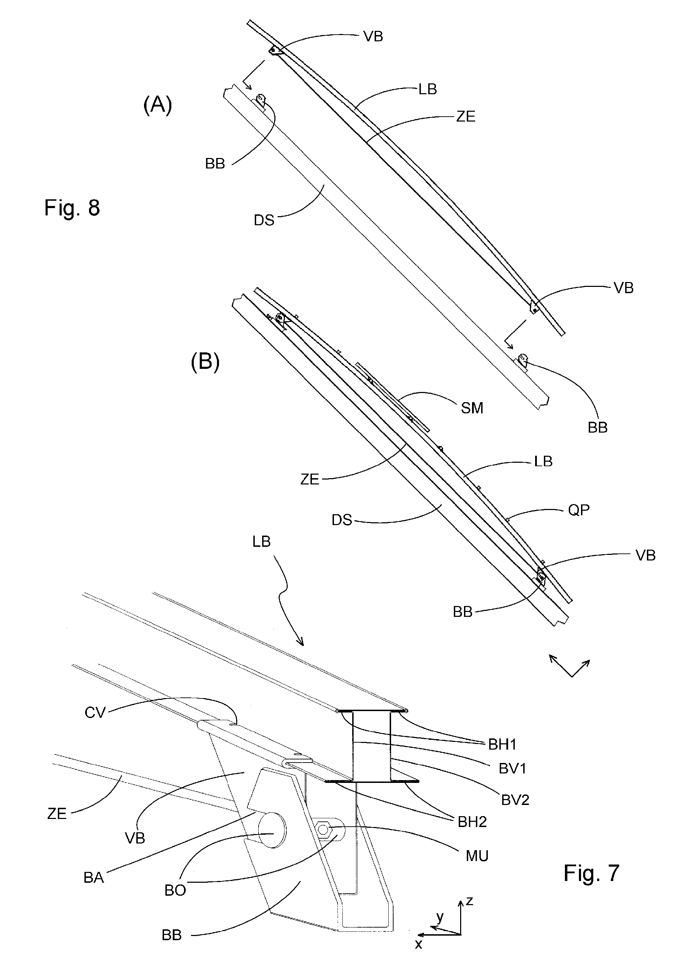

Fig. 7 zeigt als eine Ausschnitt-Darstellung einen Endbereich einer bevorzugten Ausführung eines Längsträgerprofils in Verbindung mit einer besonders vorteilhaften Befestigungsanordnung.

Das Längsträgerprofil LB ist in dieser Ausführung gebildet durch ein mehrfach an Faltkanten umgebogenes Blech, welches eine nach oben weisende Blechfläche und eine nach unten weisende Blechfläche und zwischen diesen zwei in y-z-Ebenen liegende vertikale Blechflächen BV1, BV2 enthält. Die nach oben weisende Blechfläche ist in seitlich über die vertikalen Blechflächen BV1, BV2 hinaus stehenden Teilbereichen BH1 doppellagig ausgeführt, wobei zwei Blechlagen flächig aneinander liegen und vorzugsweise in den Flächen miteinander verbunden sind, beispielsweise durch Punktschweißen, Rollschweißen, Nieten oder vorzugsweise durch Setzfügetechniken, wie insbesondere Clinchen. In ähnlicher Weise zeigt die nach unten weisende Blechfläche in seitlich über die vertikalen Blechflächen BV1, BV2 hinaus ragenden Abschnitten BH2 wiederum zwei flächig aneinander anliegende Blechlagen, welche wiederum untereinander in den aneinander liegenden Flächen verbunden sein können. In den zwischen den seitlich abstehenden Teilbereichen liegenden Teilbereichen der nach oben weisenden Blechfläche und der nach unten weisenden Blechfläche sind diese jeweils einlagig ausgeführt. Ein durch mehrfaches Abkanten eines ebenen Bleches hergestelltes Längsträgerprofil, beispielsweise mit einem Querschnitt der in Fig. 7 skizzierten Art, kann vorteilhafterweise aus einem Keul-Blechband fortlaufend hergestellt und auf die benötigten Längen abgetrennt werden. Ein derartiges Längsträgerprofil zeichnet sich durch kostengünstige Herstellung und besonders vorteilhaftes Verhältnis von Biegesteifigkeit zu Gewicht aus.

Vorteilhafterweise kann ein Anschlusselement vorgesehen sein, welches mit dem Längsträgerprofil verbunden sein, wobei ein solches Anschlusselement vorteilhafterweise sowohl zur Ankopplung des Zugelements an das Längsträgerprofil in dessen Endbereich dienen kann als auch eine Verbindung zu einem Befestigungselement, welches direkt oder indirekt auf der Dachkonstruktion befestigt sein kann, herstellen kann. Im skizzierten Beispiel ist das Anschlusselement BV als ein Blechkörper gebildet, welcher mit Befestigungslaschen die seitlich abstehenden Teilbereiche BH2 der nach unten weisenden Blechfläche des Längsträgerprofils umgreift und mit diesen fest verbunden ist, beispielsweise durch Punktschweißen oder vorzugsweise Kaltfügeverbindungen, insbesondere Clinchen.

In einem von dem Längsträgerprofil nach unten weisenden, rechteckig annähernd eine U-Form besitzenden Abschnitt des Anschlusselements ist quer zur Längsrichtung des Längsträgerelements und zur Längsrichtung des Zugelements CE ein Bolzen in dem Anschlusselement gehalten, durch welchen ein Ende des Zugelements hindurchgeführt und auf der dem Ende des Längsträgerprofils zuweisenden Seite mittels einer Mutter MU über eine Gewindeverbindung gehalten ist. Über die Gewindeverbindung mit der Mutter MU, welche in ein Gegengewinde am Ende des Zugelements eingreift, kann die Aufwölbung und Spannung des Längsträgerprofils LB variiert werden.

Der Bolzen BO steht seitlich über die Seitenwände des Anschlusselements VB hinaus und bildet mit den überstehenden Abschnitten eine Verbindung zu einem Befestigungselement BB, welches direkt oder über weitere Elemente auf einer Dachkonstruktion, beispielsweise Dachsparren befestigt werden kann.

Das Befestigungselement BB bildet eine rechteckige, nach oben offene U-Form, in welcher das Mittelteil des Anschlusselements VB mit geringem seitlichen Spiel einliegt. Das Befestigungselement BB besitzt in beiden vertikalen Schenkeln der U-Form Aussparungen BA, in welche die überstehenden Bereiche des Bolzens BA quer zur Bolzenachse eingeführt werden können. Vorteilhafterweise weist der Bolzen an seinen entgegen gesetzten Enden Verbreiterungen nach Art von Bolzenköpfen auf, welche die Aufnahmen BA übergreifen und so die vertikalen Schenkel des Befestigungselements BB zwischen sich und dem Mittelteil des Anschlusselements festlegen und somit einen weitgehend spielfreien Halt des Anschlusselements VB in dem Befestigungselement BB in Richtung der Bolzenachse gewährleisten.

Fig. 8 zeigt in einer Seitenansicht in Fig. 8 (A) eine Längsträgeranordnung mit einem Längsträger LB, einem Zugelement ZE und Anschlusselementen VB nach Art der Fig. 7 getrennt von einer Dachkonstruktion mit beispielsweise Dachsparren DS und darauf direkt oder über weitere Elemente befestigten Befestigungselementen BB der gleichfalls in Fig. 7 skizzierten Art. Die Aufnahmen BA beider Befestigungselemente BB weisen in die Richtung y der Dachneigung nach oben. Die Längsträgeranordnung wird wie durch die Pfeile veranschaulicht bis knapp über die Dachhaut mit den Anschlusselementen VB oberhalb der Befestigungselemente verlagert und dann parallel zur Dachneigung nach unten verschoben, wobei die Mittelteile der Anschlusselemente VB in die U-Form der Befestigungselemente und insbesondere die Bolzen BO der Anschlusselemente in die Aufnahmen BA der Befestigungselemente einrücken. Die Endposition ist in Fig. 8 (B) dargestellt, in welcher auch bereits die Querträger QP und ein Solarmodul SM mit eingetragen sind.

Die Bolzen BA bleiben in der Regel allein durch die parallel zur Dachneigung nach unten gerichtete Komponente der Gewichtskraft der gesamten Solaranordnung in den Aufnahmen BA. Bei Bedarf können auch noch zusätzliche Sicherungselemente vorgesehen sein.

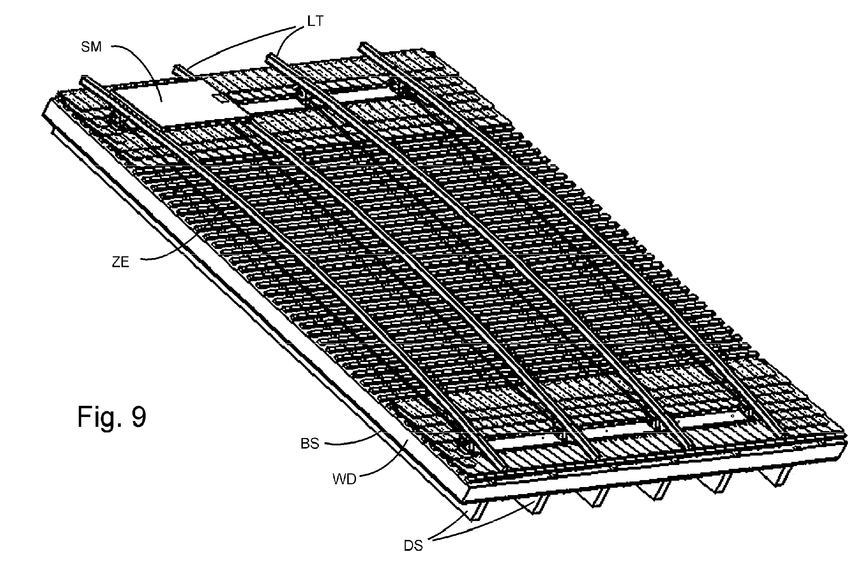

Fig. 9 zeigt eine vorteilhafte Ausführung einer Traganordnung, bei welcher Längsträger LT unmittelbar die Modulträger für die Solarmodule SM bilden und keine zusätzlichen Querträger vorgesehen sind. Bei einer solchen Anordnung, welche sich durch einen besonders einfachen Aufbau auszeichnet, ist der gegenseitige Abstand von in x-Richtung benachbarten Längsträgern im wesentlichen gleich der Erstreckung der Solarmodule SM in Längsrichtung x. Die Dacheindeckung mit Ziegeln ist in dem Beispiel nach Fig. 1 nur teilweise vorgenommen. Es ist auch lediglich ein einzelnes Solarmodul SM zur Veranschaulichung eingezeichnet. Zwischen Dachsparren DS und der Lattung für die Ziegeleindeckung ist ein Zwischenaufbau mit einer Bretterschalung und einer Dämmschicht vorgesehen. Die Befestigung der Halteelemente oder einer diese tragenden Stützanordnung erfolgt vorteilhafterweise durch die Dämmschicht WD und die Bretterschalung BS hindurch auf den Dachsparren DS.

Die Verwendung von gewölbten Längsprofilen in der Traganordnung einerseits und die werkzeuglos herstellbar und/oder lösbare Halterung von Solarmodulen auf der Traganordnung sind prinzipiell unabhängig voneinander realisierbar, aber besonders vorteilhaft in der Kombination für eine besonders einfache und schnelle Montage einer Solaranordnung auf einer Dachfläche.

Die vorstehend und die in den Ansprüchen angegebenen sowie die den Abbildungen entnehmbaren Merkmale sind sowohl einzeln als auch in verschiedener Kombination vorteilhaft realisierbar. Die Erfindung ist nicht auf die beschriebenen Ausführungsbeispiele beschränkt, sondern im Rahmen fachmännischen Könnens in mancherlei Weise abwandelbar.

## Patentansprüche

1. Traganordnung zur Montage mehrerer Solarmodule über einer Grundfläche, enthaltend mehrere in einer Längsrichtung verlaufende Längsträger, welche in einer quer zur Längsrichtung verlaufenden Querrichtung voneinander beabstandet sind, sowie Befestigungsmittel zur Befestigung der Traganordnung auf der Grundfläche oder einer Unterkonstruktion, **dadurch gekennzeichnet, dass** die Längsträger jeweils ein von der Grundfläche weg gewölbtes Längsprofil (LP, LB) und ein Zugelement (ZE), welches einen von dem Längsprofil gebildeten Bogen als Bogensehne überspannt, enthalten.

2. Traganordnung nach Anspruch 1, **dadurch gekennzeichnet, dass** die Wölbung des Längsprofils veränderbar ist.

3. Traganordnung nach Anspruch 2, **dadurch gekennzeichnet, dass** die entlang der Bogensehne wirksame Länge (ZL) des Zugelements (ZE) veränderbar ist.

4. Traganordnung nach einem der Ansprüche 1 bis 3, **dadurch gekennzeichnet, dass** das Längsprofil (LP) unter streckend wirkender Biegespannung elastisch verformt ist und das Zugelement die Streckung des Längsprofils verhindert.

5. Traganordnung nach Anspruch 4, **dadurch gekennzeichnet, dass** das Längsprofil im spannungsfreien Zustand linear verläuft.

6. Traganordnung nach Anspruch 4, **dadurch gekennzeichnet, dass** das Längsprofil im spannungsfreien Zustand einen geringer gewölbten Verlauf als im Betriebszustand zeigt.

7. Traganordnung nach einem der Ansprüche 1 bis 6, **dadurch gekennzeichnet, dass** das Zugelement im Bereich der Enden des Längsprofils an diesem gehalten ist.

8. Traganordnung nach einem der Ansprüche 1 bis 7, **dadurch gekennzeichnet, dass** die Aufwölbung des Längsprofils das Zugelement wenigstens 1 %, vorzugsweise wenigstens 2 % der Länge der Bogensehne beträgt.

9. Traganordnung nach einem der Ansprüche 1 bis 8, **dadurch gekennzeichnet, dass** die Befestigungsmittel je Längsträger zwei Befestigungselemente umfassen, welche jeweils im Bereich der Enden des Längsträgers angeordnet sind.

10. Traganordnung nach Anspruch 9, **dadurch gekennzeichnet, dass** die Befestigungselemente bei den in Längsrichtung äußersten Querträgern angeordnet sind.

11. Traganordnung nach Anspruch 9 oder 10, **dadurch gekennzeichnet, dass** die Befestigungselemente gabelförmig von der Dachfläche weg offen ausgebildet sind und das Zugelement in der Gabelform aufnehmen.

12. Traganordnung nach einem der Ansprüche 1 bis 11, **dadurch gekennzeichnet, dass** jeweils im Bereich der Enden eines Längsträgers Anschlusselemente mit diesem verbunden sind, an welchen das Zugelement in dessen Längsrichtung abgestützt ist.

13. Traganordnung nach Anspruch 12, **dadurch gekennzeichnet, dass** die Anschlusselemente zugleich zur Verbindung mit auf der Unterkonstruktion befestigten Befestigungselementen ausgebildet sind.

14. Traganordnung nach einem der Ansprüche 1 bis 13, **dadurch gekennzeichnet, dass** die Grundfläche eine geneigte Dachfläche ist.

15. Traganordnung nach Anspruch 14, **dadurch gekennzeichnet, dass** die Längsträger mittels der Befestigungsmittel auf den Dachsparren einer Dachkonstruktion befestigt sind und in Sparrenrichtung verlaufen.

16. Traganordnung nach einem der Ansprüche 1 bis 15, **dadurch gekennzeichnet, dass** die Längsträger Modulträger für die Solarmodule bilden.

17. Traganordnung nach einem der Ansprüche 1 bis 15, **dadurch gekennzeichnet, dass** die Querträger (QP) über den Längsträgern (LP, LB) verlaufen.

18. Solaranlage mit mehreren auf einer Traganordnung mit mehreren parallelen Modulträgern angeordneten und über Halteelemente auf jeweils zwei Modulträgern gehaltenen flächigen Solarmodulen, **dadurch gekennzeichnet, dass** an einem Solarmodul den Modulträgern zugewandt mehrere Halteelemente angeordnet sind, welche jeweils einen Modulträger wenigstens teilweise auf dessen dem Solarmodul abgewandter Seite hintergreifen.

19. Solaranlage nach Anspruch 18, **dadurch gekennzeichnet, dass** zumindest ein Teil der Halteelemente eine in zur Modulfläche paralleler Richtung offene Aufnahme für einen Modulträger bilden.

20. Solaranlage nach Anspruch 18 oder 19, **dadurch gekennzeichnet, dass** zumindest ein Teil der Halteelemente eine in zur Modulfläche senkrechter Richtung offene Aufnahme für einen Modulträger bilden.

21. Solaranlage nach einem der Ansprüche 18 bis 20, **dadurch gekennzeichnet, dass** erste Halteelemente parallel zur Modulfläche zum Modulrand hin offen sind und das Solarmodul an einem ersten von zwei Modulträgern halten und zweite Halteelemente senkrecht zur Modulfläche offen sind und das Solarmodul an einem zweiten von zwei Modulträgern halten.

22. Solaranlage nach einem der Ansprüche 18 bis 21, **dadurch gekennzeichnet, dass** die Modulträger im wesentlichen horizontal verlaufen und die Modulflächen geneigt ausgerichtet sind.

23. Solarmodul mit Halteelementen zur Befestigung auf zwei parallelen Modulträgern mittels Halteelementen, **dadurch gekennzeichnet, dass** zumindest ein Halteelement zur teilweisen Hintergreifung eines langgestreckten Modulträgers ausgebildet ist und eine quer zur Richtung des Modulträgers offene Modulträgeraufnahme bildet.
